# EUROPEAN PATENT APPLICATION

(11) **EP 2 821 948 A1**
(43) Date of publication of application: **07.01.2015**
(21) Application number: 13174943.4
(22) Date of filing: 03.07.2013
(51) Int. Cl.: G06Q 20/32

(54) **Mobile device for managing e-tickets and payment transactions**

(71) Applicant: BlackBerry Limited, Waterloo, ON N2K 0A7 (CA)
(72) Inventor: Truskovsky, Alexander, Waterloo, Ontario N2L 3W8 (CA); Martin, Daryl Joseph, Waterloo, Ontario N2L 3W8 (CA); Matovsky, Michael, Mississauga, Ontario L4W 0B5 (CA)
(74) Representative: Patel, Binesh

(57) **Abstract**

A method, performed by a mobile device, for managing electronic tickets, the method comprising receiving an electronic ticket, identifying private information and public information on the ticket, and displaying the ticket on a display of the mobile device to show only the public information of the ticket. A related method entails displaying an electronic ticket, receiving input to provide payment credentials in relation to the electronic ticket, and transmitting the payment credentials via a short-range transceiver on the mobile device.

## Description

### TECHNICAL FIELD

The present technology relates generally to mobile devices and, in particular, to mobile devices capable of displaying electronic tickets.

### BACKGROUND

Mobile devices or wireless communications devices may be able to store and display electronic tickets, passes, vouchers, coupons presenting bar codes or QR codes for scanning. The mobile devices may be furthermore configured to display the relevant e-ticket, pass, voucher or coupon at a predetermined time and location.

### BRIEF DESCRIPTION OF THE DRAWINGS

Further features and advantages of the present technology will become apparent from the following detailed description, taken in combination with the appended drawings, in which:

FIG. 1 is a depiction of a mobile device on which the present technology may be implemented, the depiction including a schematic depiction of some components of the mobile device;

FIG. 2 depicts a mobile device displaying an e-ticket;

FIG. 3 depicts a mobile device displaying an e-ticket that presents public information while concealing private information;

FIG. 4 depicts a mobile device displaying an e-ticket and a user interface element for providing credit card information via NFC for a transaction related to the e-ticket;

FIG. 5 depicts the mobile device displaying various payment options for payment via NFC;

FIG. 6 depicts another example of a mobile device displaying an e-ticket with a user interface element for paying a supplemental fee related to the e-ticket;

FIG. 7 depicts a data communication system for managing privacy of information on an e-ticket and for performing transactions related to the e-ticket;

FIG. 8 is a flowchart depicting a method of managing e-tickets to conceal private information; and

FIG. 9 is a flowchart depicting a method of performing a transaction via NFC related to the e-ticket.

It will be noted that throughout the appended drawings, like features are identified by like reference numerals.

### DETAILED DESCRIPTION

The present technology enables private information of an electronic ticket (or "e-ticket") to be concealed when the e-ticket is displayed by the mobile device. A further aspect of the technology enables the mobile device to activate a short-range transceiver such as an NFC chip to perform a payment or other transaction related to the e-ticket displayed by the mobile device.

Accordingly, an inventive aspect of the present technology is a method, performed by a mobile device, for managing electronic tickets. The method entails receiving an electronic ticket, identifying private information and public information on the ticket, and displaying the ticket on a display of the mobile device to show only the public information of the ticket.

Another aspect of the present technology is a computer-readable medium comprising instructions in code which when loaded into a memory and executed by a processor of a mobile device cause the mobile device to receive an electronic ticket, identify private information and public information on the ticket, and display the ticket on a display of the mobile device to show only the public information of the ticket.

Another aspect of the present technology is a mobile device having a radiofrequency transceiver for receiving an electronic ticket, a processor operatively coupled to the memory for identifying private information and public information on the ticket and a display for displaying the ticket to show only the public information of the ticket.

Yet another aspect of the present technology is a mobile device having a radiofrequency transceiver for receiving an electronic ticket, a processor operatively coupled to the memory for identifying private information and public information on the ticket, and a display for displaying the ticket to show only the public information of the ticket.

Yet another aspect of the present technology is a computer-readable medium comprising instructions in code which when loaded into a memory and executed by a processor of a mobile device cause the mobile device to display an electronic ticket, receive input to provide payment credentials in relation to the electronic ticket, and transmit the payment credentials via a short-range transceiver on the mobile device.

Yet another aspect of the present technology is a processor coupled to a memory, wherein the memory stores an electronic ticket and wherein the processor is configured to cause a display to present the electronic ticket, a user interface to receive input to provide payment credentials in relation to the electronic ticket, and a short-range transceiver to transmit the payment credentials.

The details and particulars of these aspects of the technology will now be described below, by way of example, with reference to the drawings.

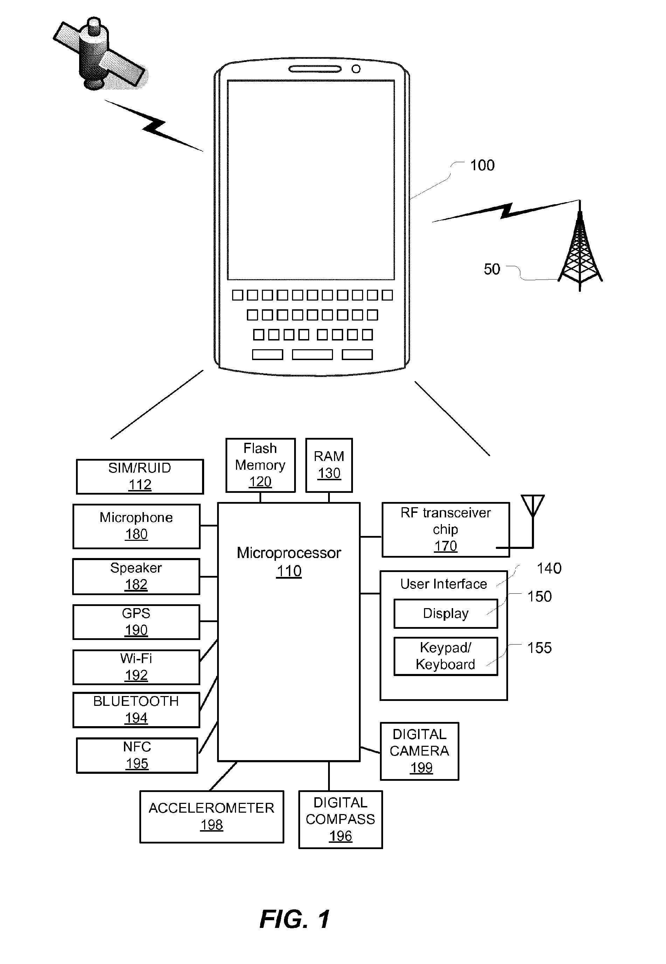

FIG. 1 is a depiction of a wireless communications device as one example of a mobile device 100 that may be used to implement this novel technology. Examples of a mobile device or wireless communications device include cell phones, smart phones, mobile phones, portable digital assistants, tablets, laptops, notebooks or any other such portable, mobile or handheld electronic communications devices.

As illustrated by way of example in FIG. 1, the mobile device 100 has a processor 110 and a memory 120, 130. The memory of the mobile device 100 may include flash memory 120 and/or random access memory (RAM) 130 although other types or forms of memory may be used. The device may also include expandable memory in the form of a removable microSD memory card. The memory stores one or more electronic tickets ("e-tickets"). These e-tickets may include electronic or virtual tickets, passes, coupons, vouchers, prepaid reservations, credits, gift cards, loyalty/point cards, etc. For the purposes of the present specification, all of these shall be referred to collectively as electronic tickets or e-tickets. The e-tickets may be stored in an electronic wallet, i.e. an application that collects and displays all e-tickets stored on the device.

As depicted by way of example in FIG. 1, the mobile device 100 includes a user interface 140 providing man-machine interface elements for interacting with the mobile device and its applications. The user interface 140 may include one or more input/output devices, such as a display screen 150 (e.g. an LCD or LED screen or touch-sensitive display screen e.g. an Active-Matrix Organic Light-Emitting Diode touchscreen display or equivalent), and a keyboard or keypad 155. A pure touch-screen device may provide a virtual keyboard onscreen and thus need not have a physical keyboard. The user interface may also optionally include any other input devices such as an optical jog pad, thumbwheel, trackball, track pad, etc. The display 150 presents the e-ticket, which include a bar code or QR code to be scanned at a scanner of a Point of Sale (POS) terminal.

As depicted by way of example in FIG. 1, the mobile device 100 may include a wireless transceiver 170 for communicating with other devices. The transceiver 170 may be a radiofrequency (RF) transceiver for wirelessly communicating with one or more base stations 50 over a cellular wireless network using cellular communication protocols and standards for both voice calls and packet data transfer such as GSM, CDMA, GPRS, EDGE, UMTS, LTE, etc. Where the computing device 100 is a wireless communications device, the device may include a Subscriber Identity Module (SIM) card 112 for GSM-type devices or a Re-Usable Identification Module (RUIM) card for CDMA-type devices. The RF transceiver 170 may include separate voice and data channels. The transceiver 170 is used to receive e-tickets. The e-tickets may be received as e-mail attachments or downloaded from websites. The e-tickets may also be received via a wired connection. To receive the e-tickets over a wire-line connection, the mobile device 100 may optionally include one or more ports or sockets for wired connections, e.g. USB, HDMI, FireWire (IEEE 1394), etc. or for receiving non-volatile memory cards, e.g. SD (Secure Digital) card, miniSD card or microSD card.

The display of an e-ticket may be triggered manually (i.e. in response to user input) or automatically. For example, any keyboard input, touchscreen input, voice command, etc. may be used to cause the device to display the e-ticket. The device may also be programmed to automatically display the e-ticket based on one or more conditions. For example, a display-triggering condition may be location. In other words, the device compares its current location to a location parameter stored in the device. This enables the e-ticket to be displayed on arrival at a location where the e-ticket is to be used (e.g. an airport, movie theater, etc.) In another embodiment, two concurrent conditions must be met to trigger the display of the e-ticket. For example, the concurrent triggering conditions may be location and time. The display thus displays the e-ticket if the device is located at the predetermined location at the predetermined time. For example, the device will only display an airline e-ticket if the device is located at the airport and if the current time is within a prescribed period of time before boarding or take-off. To determine time, the device includes an internal clock or may receive time updates from signals sent from a wireless network or from navigation satellites.

To determine current location, the mobile device 100 includes a position-determining subsystem 190 (e.g. a GNSS receiver such as a GPS receiver) capable of receiving satellite signals from which the current location of the mobile device is calculated. The processor 110 is operatively coupled to the memory 120, 130 (and to the position-determining system 190) for determining that a current location of the device matches the prescribed display-triggering location parameter (within a distance tolerance).

The position-determining subsystem 190 may be a Global Positioning System (GPS) receiver (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any global navigation satellite system (GNSS), i.e. any other satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system.

Still referring to FIG. 1, the mobile device 100 may include a microphone 180, a speaker 182 and/or an earphone jack for voice communications. Optionally, the device may include a speech-recognition subsystem for transforming voice input in the form of sound waves into an electrical signal. The electrical signal is then processed by a speech-recognition module (digital signal processor) to determine voice commands from the voice input. Voice commands may be used to cause the device to display, view, close or delete an e-ticket.

For embodiments utilizing short-range wireless connectivity to perform transactions related to the e-ticket, the mobile device 100 includes a short-range wireless transceiver such as a Wi-Fi™ transceiver 192 (e.g. IEEE 802.11 a/b/g/n), a Bluetooth® transceiver 194, and/or a near-field communications (NFC) chip 195. The mobile device 100 may also optionally include a transceiver for WiMax^{™} (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 (magnetometer) and/or a tilt sensor or accelerometer 198. The device may optionally include other sensors such as a proximity sensor, ambient light sensor, and gyroscope. Optionally, the mobile device may include a digital camera 199.

The mobile device of FIG. 1 employs the radiofrequency transceiver 170 for receiving an electronic ticket although the ticket may also be received by a wired connection, e.g. USB cable connected to a USB port on the mobile device. The processor 110 is operatively coupled to the memory 120, 130 to store the electronic ticket. The electronic ticket may be stored in an electronic wallet application that consolidates all electronic tickets and enables display and management of all electronic tickets available to the device. The processor 110 is furthermore configured to identify private information and public information on the ticket. Private information may include the user's name, credit card information (or truncated credit card information), seat number, destination, flight time, flight number, hotel name, or any information that the user does not wish to make public. Public information is all other information that is not private (i.e. any information that the user does not mind making available to the public). Therefore, all potentially visible ticket information is divided into either private information or public information. The processor coordinates with the display 150 to display the e-ticket showing only the public information of the e-ticket while concealing or suppressing the private information.

In one embodiment, the processor causes the display to present both the private and the public information in response to user input received via a user interface of the device. Thus, the user can override the device to cause any suppressed, concealed or redacted private information to be displayed. In a variant, the device may only temporarily display the private information for a predetermined period of time. The user input that causes the device to display private information may be manual input (e.g. a key, a key combination, button input, or a gesture, etc) or it may be other input such as a voice command. In one embodiment, the device may audibly present (dictate) the information to the user after detecting that the user has put the mobile device to his or her ear. In one specific embodiment, the audible presentation of the private data may be triggered by the user performing an action (e.g. touching or clicking a button or tapping on the bar code or QR code).

In one embodiment, the device employs a sensor for sensing an orientation of the mobile device relative to a user of the mobile device. The sensor may be an accelerometer or gyroscope. The processor determines from signals received from the sensor if the mobile device is facing the user and then causes the display to present both the private and the public information only if the mobile device is facing the user. This enables private information to be discreetly displayed if the device is facing the user but conceals the private information if the display is oriented away from the user.

In one embodiment, the device employs the position-determining subsystem 190 to determine its current location and the processor is configured to identify the private information and the public information on the ticket based on a current location determined by the position-determining subsystem. In this embodiment, private information need not be concealed if the device is located in a safe environment such as the user's own home or workplace or in a hotel room or VIP lounge. The safe locations may be specified by the user.

The device automatically redacts or edits the ticket information prior to displaying the information in order to conceal private information that the user may consider to be confidential or personal. This enhances the privacy of the user's data and personal life, protecting private information such as travel arrangements, hotel reservations, flight information, destinations, restaurant reservations, etc.

A further aspect of this technology enables payments or transactions related to the e-ticket to be performed. Upon arrival at a hotel or airline check-in counter, the user may need to provide a credit card or payment credentials to purchase an ancillary service offered by the hotel or airline. For example, hotels frequently require a credit card for incidentals or room charges (movies, mini-bar, room service, long-distance phone calls, etc.) Similarly, an airline may charge a further fee for extra baggage. In each instance, the user must complete a further payment or transaction related to the e-ticket. The present technology solves this problem by providing a mobile device 100 that uses its memory 120, 130 to store an e-ticket. The processor 110 coupled to the memory is configured to cause a display to present the electronic ticket, e.g. on arrival at an airline check-in counter or hotel. The user interface of the device receives input to provide payment credentials in relation to the electronic ticket. A short-range transceiver to transmit the payment credentials. The short-range transceiver may be an NFC chip. In one embodiment, the NFC chip is activated by the processor in response to receiving the input to provide the payment credentials. In another embodiment, a position-determining subsystem determines a current location of the device, a clock determines a current time, and an NFC chip is activated based on the current location and the current time.

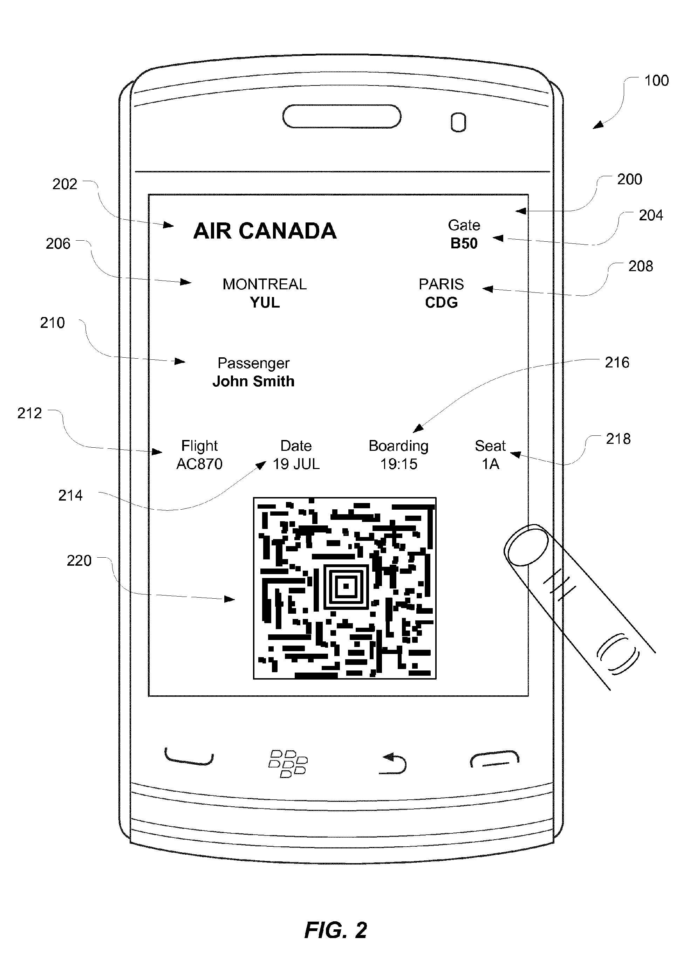

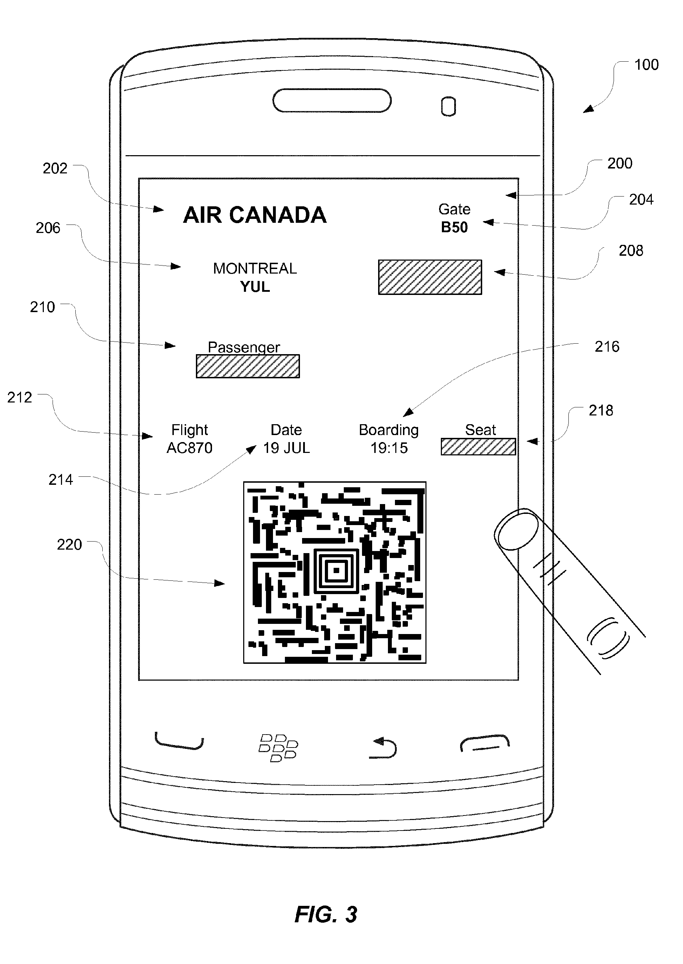

The examples depicted in FIGS. 2-6 furthermore illustrate and explain the inventive concepts. As shown in FIG. 2, a mobile device 100 displays an e-ticket 200. In this example, the e-ticket is an electronic boarding pass for an airline (e.g. Air Canada). The electronic boarding pass (as an example of an e-ticket 200) includes a name, label or logo 202 ("Air Canada") that identifies the airline (or other service-provider, merchant, or commercial entity that has issued the e-ticket). The electronic boarding pass (e-ticket 200) may also include a gate identifier ("B50") 204, a departure airport identifier 206, a destination airport identifier 208, a passenger name 210, a flight number ("AC870") 212, departure date 214, boarding time 216 and seat number 218. The electronic boarding pass (e-ticket 200) also includes a QR code 220 in this example. FIG. 3 shows the same electronic boarding pass (e-ticket 200) after it has been processed by the mobile device to identify and conceal or redact the private information. Only the public information is presented on the e-ticket shown by way of example in FIG. 3. In this example, the destination airport identifier 208, passenger name 210 and seat number 218 are considered by the mobile device (based on its settings) to be private information. These elements of information are thus redacted, removed, concealed or obscured in such a way as to prevent an unauthorized third party from reading them. The information itself may be concealed (e.g. seat number and passenger name). Optionally, the heading/label may be also be removed/concealed (e.g. the heading/label "Passenger" or the heading/label "Seat"). All other information that is not considered by the device to be private remains public. The public information may be displayed in the same manner (same font, location, etc.) as if the private information were being displayed. Alternatively, the public information may be reformatted for a more aesthetic presentation onscreen. It will be appreciated that FIG. 3 is merely one example and that, in other embodiments, more or less information may be redacted as private. For example, one could derive destination information from flight number or from departure gate and time. Therefore, for maximum privacy, in one embodiment, the device may redact all information except for the QR code or bar code.

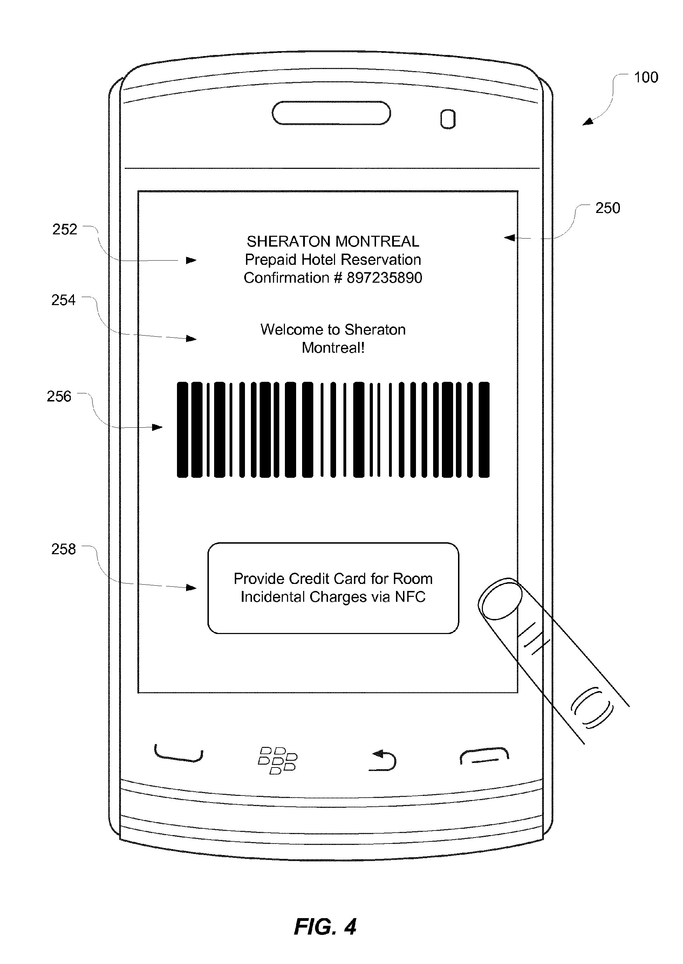

FIG. 4 is another example of a mobile device displaying an e-ticket. In this example, the e-ticket is an electronic voucher for a prepaid hotel reservation 250. The electronic voucher (e-ticket) 250 includes a name or label of the hotel 252 which may include information indicating that the hotel reservation is prepaid along with an optional confirmation number. An optional greeting message 254 may be displayed when the device location matches that of the hotel location. A bar code 256 may be displayed on the e-ticket. A user interface element 258 may be displayed to enable the device to perform, in response to user input, a transaction via NFC that is related to the e-ticket. In this particular example, the transaction involves providing credit card information to the hotel for incidental room charges (such as mini-bar, pay TV, long-distance phone, etc.). In providing the credit card information, the device may automatically select the same card that was used to reserve the hotel room or, alternatively, the device may present a selection of available cards to the user. The NFC chip may be enabled manually as shown in the figure or it may be enabled automatically in response to another event or condition such as the automatic displaying of the ticket view (e.g. based on location) or the receipt of user input launching the ticket view. The present technology enables the mobile device to not only present the e-ticket to the hotel but also to seamlessly engage in any subsequent transaction related to the e-ticket. In other words, the transaction is performed without requiring the user to close or minimize the e-ticket (or e-ticket viewer or e-ticket app) and to separately launch a payment application. The integration of the payment function into the e-ticket enables the user to provide credit card information, make mobile payments, transfer money or equivalent. This enables a variety of transactions related to the e-tickets, such as but not limited to upgrading airline tickets, hotel rooms or car rentals, paying for car rental insurance or car rental extras like child seats or navigation units, paying for excess baggage fees, etc. In another implementation, the mobile device may also receive, integrate and display special offers from the merchant (e.g. hotel, airline, etc.) in the form of e-coupons, promotions, discounts, etc. For example, the e-ticket may integrate a coupon, promotion, discount or offer from the airline or hotel to upgrade to a business class or to a superior type of room for a specified amount of money or loyalty points. As such, location-based advertising may be integrated into the present technology by displaying on the mobile device any location-based ads (offers, discounts, etc) that relate to the service or good associated with the e-ticket. For example, on arrival at a hotel, the device receives location-based ads from the hotel. These ads may be integrated into the e-ticket. The ad may contain a user-interface element which, if selected, activates the NFC payment module to redeem the coupon in a transaction.

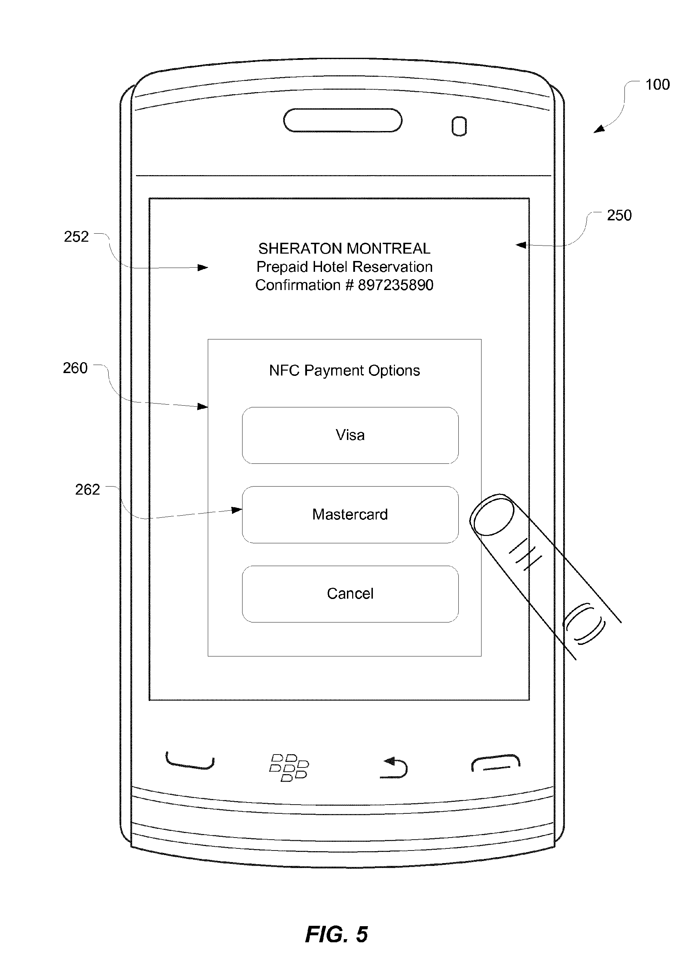

FIG. 5 depicts an example of the mobile device displaying various NFC payment options 260. The options include various credit cards or loyalty/points cards registered or associated with the NFC payment module on the device. The device thus displays user-selectable interface elements 262 (virtual buttons) to cause the NFC payment module to provide credit card information or credentials to the hotel along with any authorization data, PIN code, or the like. In another embodiment, instead of presenting a selection of credit cards, the device may automatically present only the credit card that was used for the reservation.

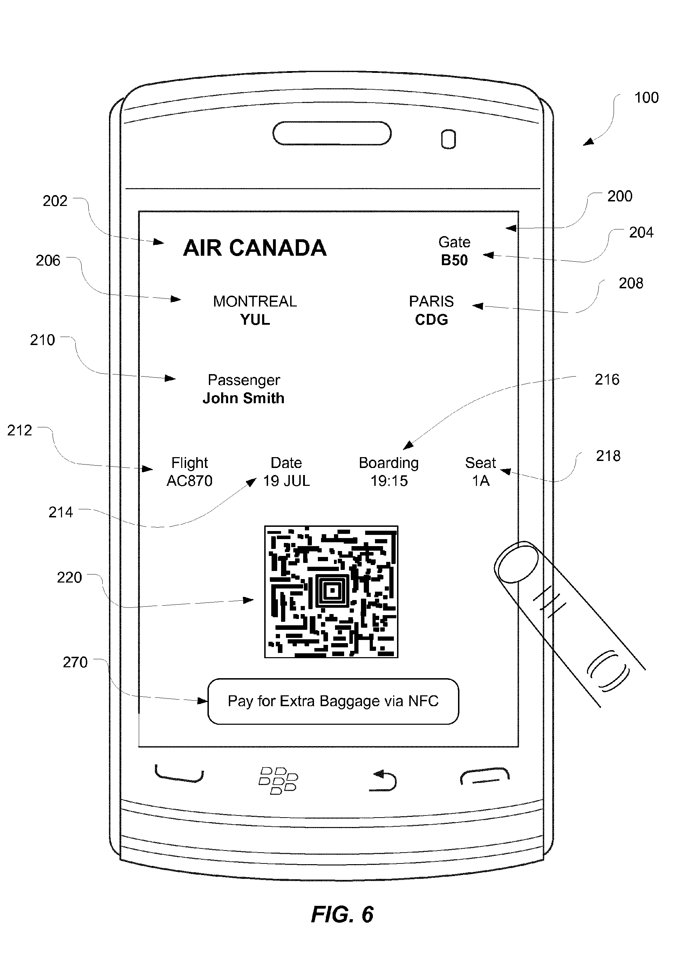

FIG. 6 depicts another example of a mobile device displaying an airline e-ticket 200 and providing a user interface element 270 on the airline e-ticket 200 to enable the passenger (device user) to pay for extra baggage via NFC by providing touch input to select the user interface element 270 and by making any optional subsequent selections relating to the type of credit card. The NFC payment module may be an application resident on the device which is launched or triggered in response to user input on the user interface element 270 indicating that the user wishes to perform an NFC transaction. The NFC payment module establishes an encrypted connection (secure channel) with another proximate NFC device connected to or within a merchant computer (e.g. hotel computer or airline computer) and then exchanges encrypted data securely with the merchant's NFC device.

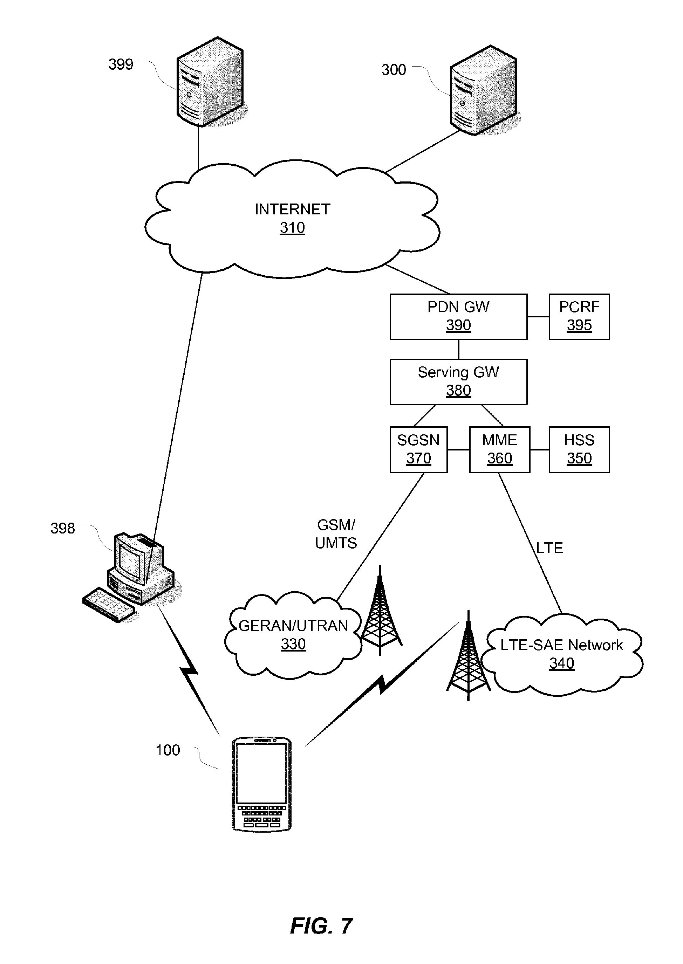

FIG. 7 depicts a data communication system for managing privacy of information on an e-ticket and for performing transactions related to the e-ticket. In the system illustrated by way of example in FIG. 7, the mobile device 100 communicates with an e-ticket issuance server 300 via the Internet 310 and a wireless/mobile network infrastructure. As shown by way of example, the mobile device 100 may employ GSM/UMTS/LTE technologies to receive the e-ticket from the e-ticket issuance server 300. The data packets sent and received by the mobile device 100 are communicated through a wireless data network represented schematically in FIG. 7 by the GERAN/UTRAN network 330 and the LTE-SAE network 340. A 4G device will communicate via the LTE (Long-Term Evolution - System Architecture Evolution) network whereas a 3G device will access the IP network via GERAN (GSM EDGE Radio Access Network) or UTRAN (Universal Terrestrial Radio Access Network for a UMTS radio access network). LTE data packets are handled by mobile management entity (MME) 360 whereas GSM/UMTS data packets are handled by serving GPRS support node (SGSN) 370. A Home Subscriber Server (HSS) 350, serving gateway 380 and packet data network gateway 390. A Policy Charging and Rules Function (PCRF) 395 provides Quality-of-Service (QoS) information to the packet data network gateway, dynamically manages data sessions, and also determines a charging policy for packets. A merchant (or Point-of-Sale) computing device 398 may be used by the merchant (e.g. airline, hotel, etc.) to receive the credit card information or credentials via NFC from the mobile device 100. The merchant computing device 398 securely communicates the credit card information or credentials to a credit card payment processing server 399 via the Internet 300 to charge the credit card or to obtain a pre-authorization to ensure the card is valid and has sufficient funds (available credit).

In the illustrated embodiments, the communication between the mobile device 100 and the merchant computing device 398 is accomplished via NFC. However, in other embodiments, other short-range wireless communication protocols or technologies may be employed. For example, the mobile device 100 may communicate with the merchant computing device 399 using the Bluetooth® transceiver 194, a transceiver for WiMax^{™} (IEEE 802.16), a transceiver for ZigBee® (IEEE 802.15.4-2003 or other wireless personal area networks), an infrared transceiver or an ultra-wideband transceiver.

The present technology also provides methods of managing electronic tickets and then performing transactions related to the electronic tickets.

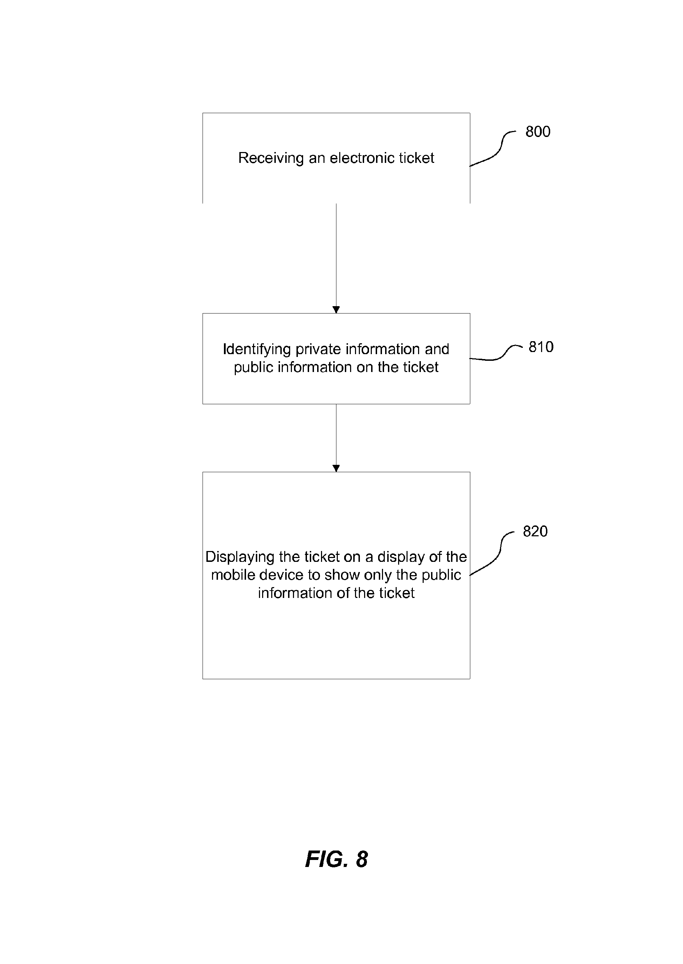

As depicted in FIG. 8, the method of managing electronic tickets entails receiving (800) an electronic ticket, identifying (810) private information and public information on the ticket, and displaying (820) the ticket on a display of the mobile device to show only the public information of the ticket. In one implementation, the method further entails displaying both the private and the public information in response to user input. In another implementation, the method entails sensing an orientation of the mobile device relative to a user of the mobile device, determining if the mobile device is facing the user, and displaying both the private and the public information only if the mobile device is facing the user. In one implementation, identifying the private information and the public information on the ticket comprises determining private information based on a current location.

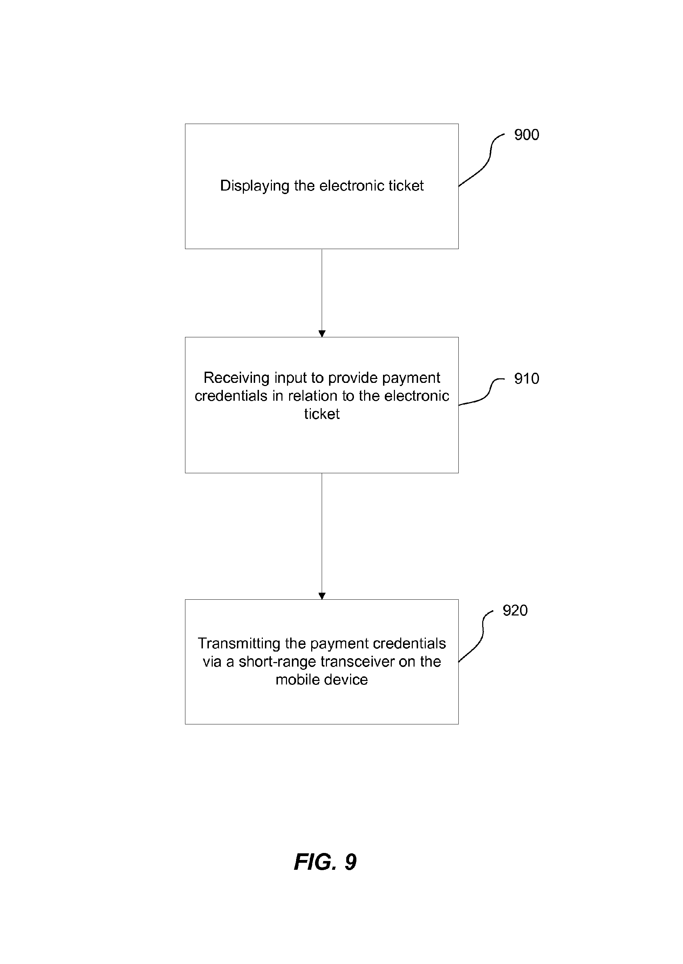

As depicted in FIG. 9, the method of performing a transaction related to the electronic ticket entails displaying (900) the electronic ticket, receiving (910) input to provide payment credentials in relation to the electronic ticket, and transmitting (920) the payment credentials via a short-range transceiver on the mobile device. In one implementation, the method further involves activating an NFC chip in response to receiving the input to provide the payment credentials. In one implementation, the method further involves activating an NFC chip based on location and time.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A method, performed by a mobile device, for managing electronic tickets, the method comprising:
receiving an electronic ticket;
identifying private information and public information on the ticket; and
displaying the ticket on a display of the mobile device to show only the
public information of the ticket.

2. The method as claimed in claim 1 further comprising displaying both the private and the public information in response to user input.

3. The method as claimed in claim 1 or claim 2 further comprising:
sensing an orientation of the mobile device relative to a user of the mobile
device;
determining if the mobile device is facing the user; and
displaying both the private and the public information only if the mobile
device is facing the user.

4. The method as claimed in claim 1 or claim 2 wherein identifying the private information and the public information on the ticket comprises determining private information based on a current location.

5. A computer-readable medium comprising instructions in code which when loaded into a memory and executed by a processor of a mobile device cause the mobile device to perform the method of any one of claims 1 to 4.

6. A mobile device comprising:
a radiofrequency transceiver for receiving an electronic ticket; and
a processor operatively coupled to the memory for performing the method of
any one of claims 1 to 4.

7. A method, performed by a mobile device, comprising:
displaying an electronic ticket;
receiving input to provide payment credentials in relation to the electronic
ticket; and
transmitting the payment credentials via a short-range transceiver on the
mobile device.

8. The method as claimed in claim 7 further comprising activating an NFC chip in response to receiving the input to provide the payment credentials.

9. The method as claimed in claim 7 further comprising activating an NFC chip based on location and time.

10. A computer-readable medium comprising instructions in code which when loaded into a memory and executed by a processor of a mobile device cause the mobile device to perform the method of any one of claims 7 to 9.

11. A mobile device comprising:
a processor coupled to a memory, wherein the memory stores an electronic
ticket and wherein the processor is configured to cause a display to present the electronic ticket;
a user interface to receive input to provide payment credentials in relation to
the electronic ticket; and
a short-range transceiver to transmit the payment credentials.

12. The device as claimed in claim 11 further comprising an NFC chip activated by the processor in response to receiving the input to provide the payment credentials.

13. The device as claimed in claim 11 further comprising a position-determining subsystem for determining a current location of the device, a clock for determining a current time, and an NFC chip activated based on the current location and the current time.
